# EUROPÄISCHE PATENTSCHRIFT

(11) **EP 3 448 896 B1**
(45) Veröffentlichungstag und Bekanntmachung des Hinweises auf die Patenterteilung: **07.06.2023**
(21) Anmeldenummer: 17718327.4
(22) Anmeldetag: 22.03.2017
(51) Int. Cl.: C08F 8/28, C08F 120/56, D21H 17/37, D21H 17/38, D21H 21/18

(54) **VERFAHREN ZUR HERSTELLUNG EINES TROCKENVERFESTIGERS AUS GLYOXYLIERTEM POLYACRYLAMID**
METHOD FOR PRODUCING A DRY STRENGTHENING AGENT CONSISTING OF GLYOXALATED POLYACRYLAMIDE
PROCÉDÉ DE PRODUCTION D'UN AGENT DE RÉSISTANCE À L'ÉTAT SEC EN POLYACRYLAMIDE GLYOXYLÉ

(30) Priorität: 25.04.2016 AT 2122016
(43) Veröffentlichungstag der Anmeldung: 06.03.2019
(73) Patentinhaber: Applied Chemicals Handels-GmbH, 1147 Wien (AT)
(72) Erfinder: KERMAN, Nuri, 64291 Darmstadt (DE)
(74) Vertreter: Cunow, Gerda
(86) Internationale Anmeldenummer: PCT/AT2017/000016
(87) Internationale Veröffentlichungsnummer: WO 2017/185110

(56) Entgegenhaltungen:
- WO-A2-2013/084062
- US-A- 3 556 932
- US-B2- 7 875 676

## Beschreibung

Die vorliegende Erfindung bezieht sich auf ein Verfahren zur Herstellung eines Trockenverfestigers aus glyoxyliertem Polyacrylamid, bei welchem eine wässerige Lösung von Polyacrylamid unter Rühren mittels einer Zirkulationspumpe mit Ethandial (Glyoxal) versetzt wird, die Reaktion durch Zugabe einer Base, insbesondere einer starken Base, bei einem pH-Wert größer 8 gestartet wird und unter Rühren oder Zirkulieren reagieren gelassen wird, worauf nach Ablauf einer vorgegebenen Reaktionszeit die Reaktion durch Zugabe einer Säure unter Rühren oder Zirkulieren gestoppt wird.

Verfahren zur Herstellung von Trockenverfestigern für die Papierindustrie sind bekannt, wobei die meisten Verfahren kontinuierlich arbeiten. In derartigen Verfahren wird üblicherweise eine im Wesentlichen wässerige Reaktionsmischung eines Vinylamidpolymers und eines reaktiven Zelluloseagens bei einem basischen pH für eine vorbestimmte Zeit reagieren gelassen, wobei eine Mehrzahl von Faktoren, wie beispielsweise die Temperatur des eintretenden Wassers, der pH der Reaktionsmischung, der Verbrauch des reaktiven Zellulosematerials, die Konzentration des Vinylamidpolymers vor und während der Bildung des Addukts und dgl. gemessen, um die Reaktion rechtzeitig, wenn das gewünschte Addukt gebildet wurde, stoppen zu können. Um diese Reaktion rechtzeitig stoppen zu können, sind neben einer Vielzahl von verschiedenen Messungen, insbesondere bereits Viskositätsmessungen zur Bestimmung des Reaktionsgrads vorgenommen worden. Die meisten bekannten Verfahren führen zu Produkten, welche nicht in situ hergestellt werden sondern mittels Tankwagen zum Letztverbraucher transportiert werden und dort auf die Konzentration, welche für die Umsetzung erforderlich ist, welche etwa 3 bis 4 %, verdünnt wird. Nachteilig an diesen bekannten Verfahren ist, dass riesige Flüssigkeitsmengen transportiert werden müssen und andererseits die Produkte trotz zugesetzter Stabilisatoren während des Transports leiden und somit die insgesamte Lagerdauer bzw. Shelf Life verringert ist.

So beschreibt die US 7,875,676 ein Verfahren zur Herstellung eines reaktiven Zellulosepolyvinylamidaddukts, bei welchem eine wässrige Reaktionsmischung aus Vinylamidpolymer und reaktivem Zelluloseagens kontinuierlich umgesetzt wird und während der Umsetzung die Viskosität gemessen wird. Wenn die Viskosität nicht mehr als 30 cP bei einer Temperatur von 25 °C beträgt, wird die Reaktion gestoppt. Derartige Verfahren, bei welchen die Viskosität des Addukts gemessen wurde, sind dahingehend problematisch, dass, falls der Zeitpunkt für das Stoppen der Reaktion übersehen wird, d.h. die Viskosität zu stark ansteigt, ein wasserunlösliches Gel gebildet wird, welches nicht als Trockenverfestiger einsetzbar ist. Darüber hinaus enthalten derartige glyoxylierte Addukte signifikante Mengen an organischen Materialien bzw. Lösungsmittel, wie organische Öle, welche nicht nur kostenintensiv sondern auch hoch flüchtig sind, was den Einsatz von derartigen Addukten beschränkt.

Der WO 2009/059725 sind glyoxilierte N-Vinylamine entnehmbar, bei welchen eine Mischung aus Acrylamid und Diallydimethylammoniumchlorid glyoxiliert wird, wobei die Reaktion ausschließlich mittels Trübungsmessung verfolgt wird, sodass ein exaktes Ende bzw. eine exakte Aussage, wann eine quantitative Umsetzung erfolgt ist, nicht möglich erscheint.

Der WO 2013/084062 A2 ist ein Verfahren zur Herstellung eines zelluloseraktiven Addukts aus Polyvinylamid entnehmbar, bei welchem die Bildung des gewünschten Addukts mit Hilfe eine Änderung der Trübung bestimmt wird.

Darüber hinaus leiden die kommerziell erhältlichen glyoxylierten Polyvinylamidaddukte daran, dass sie nur eine sehr kurze Lagerdauer von einigen Wochen aufweisen, wobei diese Lagerdauer von dem pH-Wert, der Konzentration und der Lagertemperatur abhängt, was im praktischen Einsatz problematisch ist, da immer für frisch angeliefertes bzw. frisch verfügbares Addukt Sorge getragen werden muss.

Um bei einer derartigen Vorgangsweise zumindest halbwegs ökonomisch zu arbeiten, werden Produkte angeliefert, welche für den Einsatz eine zu hohe Konzentration des Vinylamidpolymers aufweisen und müssen somit vor dem tatsächlichen Einsatz verdünnt werden, um eine sinnvolle Umsetzung möglich zu machen.

Schließlich bleibt in den meisten bekannten Verfahren, wenn die gewünschte Viskosität erreicht ist, eine große Menge an nicht umgesetztem Glyoxal in dem Produkt zurück, wodurch der Nachteil entsteht, dass ein derartiges Produkt nicht als Trockenverfestiger zum Einsatz gelangen kann.

Die Verwendung von glyoxyliertem Polyacrylamid als Trockenverfestiger für die Verfestigung von Papier und Karton wird, ebenso wie jene von reaktivem, wasserlöslichen Vinylamidcopolymeren der Zellulose, welche mit Glyoxal oder reaktiven Zelluloseagentien derart modifiziert sind, dass sie thermohärtend sind, zur Verfestigung von Papier und Karton eingesetzt. Aufgrund der Verwendung von Glyoxal als Vernetzungsmittel tritt in diesen Produkten jedoch ein Problem in Bezug auf die Stabilität und Lagerung derartiger Suspensionen auf, welche aufgrund der verringerten Stabilität Lagerzeiten zwischen etwa 3 und 6 Wochen besitzen.

Die Erfindung zielt nun darauf ab, ein Verfahren zur Herstellung eines Trockenverfestigers zur Verfügung zu stellen, mit welchem es gelingt, Glyoxal in der Reaktionsmischung quantitativ umzusetzen und somit einen universell, insbesondere unmittelbar nach Herstellung einsetzbaren Trockenverfestiger mit verlängerter Lagerstabilität zur Verfügung zu stellen. Die Erfindung zielt weiterhin darauf ab, ein Verfahren zur Herstellung eines Trockenverfestigers zur Verfügung zu stellen, welches derart präzise geführt werden kann, dass die quantitave Umsetzung von Glyoxal in der Reaktionsmischung zweifelsfrei festgestellt werden kann.

Zur Lösung dieser Aufgabe ist das erfindungsgemäße Verfahren dadurch gekennzeichnet, dass die Umsetzung von Polyacrylamid mit Ethandial in einem Mengenverhältnis von 3:1 bis 10:1 für eine vorbestimmte konstante Zeit zwischen 6 und 20 Minuten, insbesondere 12 bis 18 Minuten durchgeführt wird, dass das Verfahren als diskontinuierliches Verfahren geführt wird, bei welchem eine quantitative Umsetzung des Ethandials mit einer Überschussmenge von Polyacrylamid in einem wässerigen, basischen Milieu durch d) Abfall des pH-Wertes sowie wenigstens einem weiteren der Faktoren gewählt aus:
a) Trübungsmessung,
b) pH-Wert-Anpassung über die Temperatur,
c) pH-Wert-Anpassung über die Reaktionszeit,
e) Stromaufnahme der Zirkulationspumpe
   gesteuert und/oder geregelt wird.

Um eine möglichst maximale Auslastung der Reaktionsanlage zur Verfügung stellen zu können, ist das erfindungsgemäße Verfahren so geführt, dass die Umsetzung von Polyacrylamid mit Ethandial für eine vorbestimmte konstante Zeit zwischen 6 und 20 Minuten, insbesondere 12 bis 18 Minuten durchgeführt wird. Durch die vorbestimmte konstante Zeit zwischen maximal 20 Minuten und minimal 6 Minuten sowie bevorzugt zwischen 12 bis 18 Minuten gelingt es, bei üblicherweise vorherrschenden Temperaturen jeweils eine vollständige Umsetzung von Polyacrylamid und Glyoxal zu erreichen. Die Zeitunterschiede sind hierbei davon abhängig, ob die Reaktion bei höheren oder niedrigeren Außentemperaturen, welche sich auch auf die Temperatur in der Produktionshalle einen Einfluss haben, und/oder bei höheren oder niedrigeren Wassertemperaturen durchgeführt wird.

Dadurch, dass das Verfahren als diskontinuierliches Verfahren geführt wird, kann bei jeder beliebigen Charge die quantitative Umsetzung des Ethandials mit einer Überschussmenge an Polyacrylamid in einem wässrigen, basischen Milieu in Abhängigkeit von einer Mehrzahl von Faktoren gesteuert bzw. geregelt werden. Indem gleichzeitig wenigstens zwei dieser Faktoren während der Umsetzung gemessen werden, gelingt es, bei jeder Charge ein reproduzierbares bzw. exakt reproduzierbares Produkt herzustellen.

Die einzelnen Faktoren, von welchen jeweils zwei gleichzeitig als Steuer- bzw. Regelgrößen herangezogen werden, sind hierbei

### a) die Trübungsmessung

Es hat sich herausgestellt, dass die Änderung der Trübung ein Indikator für den Umsetzungsgrad der Reaktion ist, wobei die Reaktionsmischung eine Anfangstrübung aufweist, welche üblicherweise im Bereich von 5 bis 15 NTU liegt. Wenn die Trübung um einen bestimmten Wert während der Reaktion angestiegen ist, ist dies ein Indikator, dass der gewünschte Umsetzungsgrad erreicht wurde und eine weitere Umsetzung durch Zugabe von Säure verhindert werden kann. Wenn man die Reaktion durch die Zugabe von Säure nicht stoppt, dann steigt die Trübung weiter an. Vorzugsweise wird die Trübungsmessung hierbei als Differenzmessung durchgeführt, wodurch der Wert der Anfangstrübung in die Messung nicht eingeht und immer ein eindeutiges Ergebnis erhalten wird.

### b) pH-Wert-Anpassung über die Temperatur

Grundsätzlich ist im Zusammenhang mit der Umsetzung von Polyacrylamid mit Ethandial festzuhalten, dass die Reaktion immer dann stattfindet, wenn die Lösung einen basischen pH-Wert aufweist. Hierbei ändert sich die Reaktionsdauer in Abhängigkeit vom pH-Wert, was eine relativ aufwendige Steuerung bzw. Regelung der Anlage erfordern würde. Es hat sich überraschender Weise jedoch herausgestellt, dass die Reaktionszeit im Wesentlichen konstant bleibt bzw. voreingestellt werden kann und dass Reaktionszeiten zwischen 12 und 18 min. das Optimum zwischen zu langen Reaktionszeiten, bei welchen Kapazität der Anlage stark sinken würde und zur kurzen Reaktionszeiten, bei welchen eine erhöhte Belagsbildung an der Behälterwand und in den Rohrleitungen der Anlage beobachtet werden kann, darstellt.

Deshalb ist neben dem pH-Wert ist auch die Temperatur ein wesentlicher Faktor zur Steuerung der Reaktionsgeschwindigkeit. Da es in der Praxis jedoch kaum möglich ist, die Temperatur eines Reaktionsgemischs immer konstant zu halten, wird gemäß der Erfindung die pH-Wert-Anpassung über die Temperatur vorgenommen, d.h. es wird ein Temperaturkorrekturfaktor eingegeben, von welchem ausgehend der pH-Wert automatisch von einem bestimmten Wert pro Grad Temperaturunterschied verringert bzw. erhöht wird. Als Sollwert kann z.B. 20 °C gewählt werden.

### c) pH-Wert-Anpassung über die Reaktionszeit

Es ist auch möglich, den pH-Wert über die Reaktionszeit zu korrigieren. Hierbei wird im Wesentlichen so vorgegangen, dass ein pH-Wert eingestellt wird, um welchen der pH-Sollwert im Falle einer Zeitabweichung bis zum Erreichen der quantitativen Umsetzung erreicht wurde, korrigiert wird. Weiterhin wird ein minimaler pH-Wert festgelegt, um welchen der pH-Sollwert im Falle von mehreren hintereinander auftretenden Zeitabweichungen verringert werden darf, genauso wie ein maximaler pH-Wert festgelegt wird, auf welchen der pH-Sollwert im Fall von mehreren Zeitabweichungen hintereinander erhöht werden darf. Die pH-Wert-Korrektur erfolgt gemäß der Erfindung erst nach einer vorab festgelegten Zahl von Überschreitungen bzw. Unterschreitungen, wodurch verhindert wird, dass bei jeder Abweichung unmittelbar korrigiert werden muss. Wenn nun bei einer Charge die gewünschte Reaktionszeit um einen gewissen Wert über- oder unterschritten wird, wobei hier auch ein Totbereich, d.h. ein Bereich, der nicht in die Messung eingeht, festgelegt werden kann, wird die abweichende Reaktionszeit gespeichert, wenn bei der nächsten Charge die gleiche Abweichung eintritt, wird automatisch eine Korrektur vorgenommen.

### d) Abfall des pH-Werts

Bei der Umsetzung von glyoxyliertem Polyacrylamid mit Ethandial wird während der Reaktion ein Abfall des pH-Wert gemessen. Die Umsetzung kann daher auch dahingehend gesteuert bzw. geregelt werden, dass, wenn dieser pH-Wert-Abfall beobachtet wird, die Reaktion gestoppt wird, da sie dann ebenfalls quantitativ abgelaufen ist.

### e) Stromaufnahme der Zirkulationspumpe

Schließlich ist es möglich, die Reaktion über die Stromaufnahme der Zirkulationspumpe, welche in eine Anlage, in welcher die erfindungsgemäße Reaktion durchgeführt wird integriert ist, zu steuern bzw. zu regeln. Hier weist die Zirkulationspumpe während der Reaktion einen stetig ansteigenden Stromverbrauch an, welcher am Ende der quantitativen Umsetzung sich abrupt auf einen konstanten, nicht mehr ansteigenden Wert einstellt und somit das Ende der Reaktion anzeigt. Dieser Stromverbrauch der Zirkulationspumpe, welcher angezeigt und ggf. auch aufgezeichnet wird, kann somit ebenfalls zur Steuerung des Verfahrens herangezogen werden.

Gemäß der Erfindung werden wenigstens zwei dieser Parameter gemessen bzw. bestimmt, um eine sichere Angabe über das Reaktionsende, d.h. über die quantitative Umsetzung von Ethandial bzw. Glyoxal mit Polyacrylamid zur Verfügung zu haben. Mit einer derartigen Verfahrensführung gelingt es nun überraschend, ein Addukt aus Polyacrylamid und Glyoxal herzustellen, welches eine deutlich erhöhte Lagerstabilität gegenüber herkömmlichen Addukten hat, bei gleichzeitig verringertem Wassergehalt des Addukts, was auf fehlende Restmengen an nicht umgesetztem Glyoxal zurückgeführt werden kann.

Eine besonders zuverlässige Verfahrensführung und vor allem eine quantitative Umsetzung des Ethandials gelingt gemäß der Erfindung dann, wenn, wie dies einer Weiterbildung der Erfindung entspricht, Polyacrylamid und Ethandial in einem Mengenverhältnis von 5:1 bis 6:1 eingesetzt werden.

Insbesondere wenn der pH-Wert-Abfall als eine der Steuer- bzw. Regelgrößen für das Bestimmen des Endes der Reaktion herangezogen wird, wird, wie dies einer Weiterbildung der Erfindung entspricht, das Verfahren so geführt, dass die Reaktion von Polyacrylamid und Ethandial durch Absenken des pH-Werts des Reaktionsgemischs auf einen Wert zwischen 2 und 6, insbesondere 3,5 und 4,5 durch Zugabe von Säure gestoppt wird. Hierbei wird, sobald der pH-Wert-Abfall von etwa 0,3 beobachtet wird, die Reaktion durch Säurezugabe gestoppt und der pH-Wert des Systems auf Werte zwischen 2 und 6, insbesondere 3,5 und 4,5 abgesenkt. Als Säuren können hierbei beliebige Säuren gewählt aus Schwefelsäure, schwefelige Säure, Salzsäure, Flusssäure, Essigsäure, Zitronensäure, Phosphorsäure, Adipinsäure, sowie Oxalsäure zugesetzt werden.

Wenn bei einer Führung des Verfahrens gemäß der Erfindung als Steuer- bzw. Regelgrößen die Trübungsmessung und/oder der pH-Wert-Abfall herangezogen werden, wird das erfindungsgemäße Verfahren so geführt, dass das Ansäuern nach Einsetzen eines pH-Wert-Abfalls der Reaktionsmischung um einen Wert von wenigstens 0,1 bis etwa 1, insbesondere 0,3 und/oder nach Anstieg der Trübung der Reaktionsmischung um 4 bis 10 NTU, insbesondere 6 NTU durchgeführt wird. Insbesondere wenn beide Faktoren, nämlich der pH-Wert-Abfall und der Anstiegt der Trübung in Betracht gezogen werden, gelingt es, das Reaktionsende exakt festzustellen und die Reaktion unmittelbar nach Erreichen der quantitativen Umsetzung von Polyacrylamid mit Ethandial durch Zusatz von Säure zu stoppen.

Gemäß einer Weiterbildung der Erfindung wird, wenn die pH-Wert-Anpassung über die Temperatur vorgenommen wird, so vorgegangen, dass ausgehend von einer Temperatur von 25 °C des Reaktionsgemisches mit steigender Temperatur des Reaktionsgemisches der pH-Wert entsprechend der Formel pH Start = Basis pH + [(Temp Start - 20 °C) . F], worin der Basis pH einen vorgewählten Wert darstellt, der pH Start sich aus der Reaktion ergibt und den Startwert für die nächste ausstehende Reaktion darstellt, die Temp Start die Temperatur am Beginn der Reaktion darstellt und F einen Multiplikator zwischen 0,03 und 0,08 darstellt, abgesenkt und mit sinkender Temperatur angehoben wird. Mit einer derartigen Vorgangsweise wird, da die Reaktionstemperatur über die Zeit nicht 100 %ig konstant gehalten werden kann, vermieden, dass jedes Mal, wenn eine geringe Abweichung der Temperatur stattfindet, unmittelbar eine Regelung des Verfahrens einsetzt, sondern es gelingt mit einer derartigen Verfahrensführung, durch Auswählen eines Temperaturkorrekturfaktors den Soll-pH-Wert der Reaktionsmischung mit sehr geringen Abweichungen einzustellen, wie dies zuvor beschrieben wurde.

Hierbei wird, wie dies einer bevorzugten Weiterbildung einer derartigen Verfahrensführung entspricht, so vorgegangen, dass die Anhebung oder Absenkung des pH-Wertes mit einem dem Multiplikator F entsprechenden Temperaturkorrekturfaktor der zwischen 0,03 und 0,08, insbesondere 0,05 gewählt ist, vorgenommen wird. Hier kann beispielsweise so vorgegangen werden, dass ausgehend von einer vorab gegebenen Temperatur von z.B. 20 °C der pH-Wert automatisch um einen einstellbaren vorab festgelegten und dann nicht weiter veränderbaren Wert pro Grad Temperaturunterschied verringert bzw. erhöht wird, wobei ein derartiger Korrekturfaktor zwischen 0,03 und 0,08, insbesondere mit 0,05 gewählt wird. Schließlich können auch gemäß der Erfindung verschiedene Temperaturkorrekturfaktoren vorab gewählt werden, in Abhängigkeit von den jeweiligen Reaktionstemperaturen, beispielsweise Temperaturkorrekturfaktor KALT, der frei einstellbar ist, da bei KALT die Reaktionstemperaturen von beispielsweise 10 °C eine höhere pH-Wert-Anhebung erfordern, um die Reaktionszeit konstant zu halten, ein Temperaturkorrekturfaktor WARM, auch dieser ist frei einstellbar, beispielsweise um bei hohen Reaktionstemperaturen, wie beispielsweise 30 °C den pH-Wert möglichst gering zu halten und schließlich den Temperaturkorrekturfaktor NORMAL, das ist jener Faktor, der bei der normal vorgewählten Reaktionstemperatur gewählt wird. Diese Voreinstellung erfolgt meist in Abhängigkeit von der Jahreszeit oder der Klimazone in welcher die Anlage aufgestellt ist, da die Temperatur in einer Werkshalle üblicherweise stark von der jeweils herrschenden Außentemperatur beeinflusst ist.

Wenn insbesondere eine Reaktionssteuerung über die pH-Wert-Anpassung in Abhängigkeit von der Reaktionszeit vorgenommen wird, ist das erfindungsgemäße Verfahren dahingehend weitergebildet, dass bei festgelegter konstanter Umsetzungszeit eine pH-Wertanpassung um 0,1 bis 1,0, insbesondere 0,2 bis 0,4, nach wenigstens einmaliger Feststellung einer Abweichung zwischen 1 und 10 Minuten, insbesondere 2 bis 4 Minuten von der festgelegten Umsetzungszeit, vorgenommen wird. Mit einer derartigen Vorgangsweise wird vermieden, dass nicht bei jeder noch so geringen Abweichung der Reaktionszeit von der festgelegten Umsetzungszeit bis zur Vervollständigung der Reaktion eine pH-WertAnpassung vorgenommen wird, sondern die tatsächliche Abweichung von der festgelegten Zeit gemessen wird und erst dann eine Anpassung des pH-Werts vorgenommen wird, wodurch es gelingt, die Reaktionszeit wiederum in Richtung der festgelegten Reaktionszeit zu verschieben.

Eine besonders elegante Möglichkeit der Steuerung des Verfahrens zur Herstellung von einem Trockenfestiger durch Umsetzung von Polyacrylamid mit Glyoxal wird dadurch erreicht, dass, wie dies einer Weiterbildung der Erfindung entspricht, die pH-Wert Absenkung des Reaktionsgemisches mit Säure bei Erreichen einer konstanten Stromaufnahme im Bereich von 0,1 A bis 1 A, insbesondere 0,2 A bis 0,6 A gegenüber einem Ausgangswert der Zirkulationspumpe durchgeführt wird. Bei einer derartigen Verfahrensführung ist der Moment, wo die Stromaufnahme der Zirkulationspumpe einen konstanten Wert erreicht wird, zweifelsfrei zu erkennen, worauf unmittelbar nach diesem Zeitpunkt eine Säure zugesetzt wird, um die Reaktion zu stoppen. Mit einer derartigen Steuerung gelingt es somit, die Reaktion quantitativ Umsetzung zu führen.

Besonders zuverlässige Ergebnisse der Steuerung des Verfahrens zur Herstellung eines Trockenfestigers, welcher durch Umsetzung von Polyacrylamid mit Glyoxal gewonnen wird, werden gemäß der Erfindung dadurch erreicht, dass das Verfahren so geführt wird, dass die Steuerung und/oder Regelung des Verfahrens durch Überwachung einer Kombination der Faktoren a) und d); a), b), c) und d); a), d) und e); b) und d); b), c) und d) oder b), d) und e) durchgeführt wird.

Die Erfindung wird nachfolgend anhand eines Ausführungsbeispiels sowie der in der Figur dargestellten schematischen Verfahrensführung näher erläutert. In dieser zeigen
Fig. 1 den Aufbau einer Vorrichtung zur Durchführung des Verfahrens zur Herstellung eines Trockenverfestigers gemäß der Erfindung, und
Fig. 2 einen Plot, welcher die Stromaufnahme der Zirkulationspumpe, den pH-Wert und die Trübungsänderung während der Umsetzung zeigt.

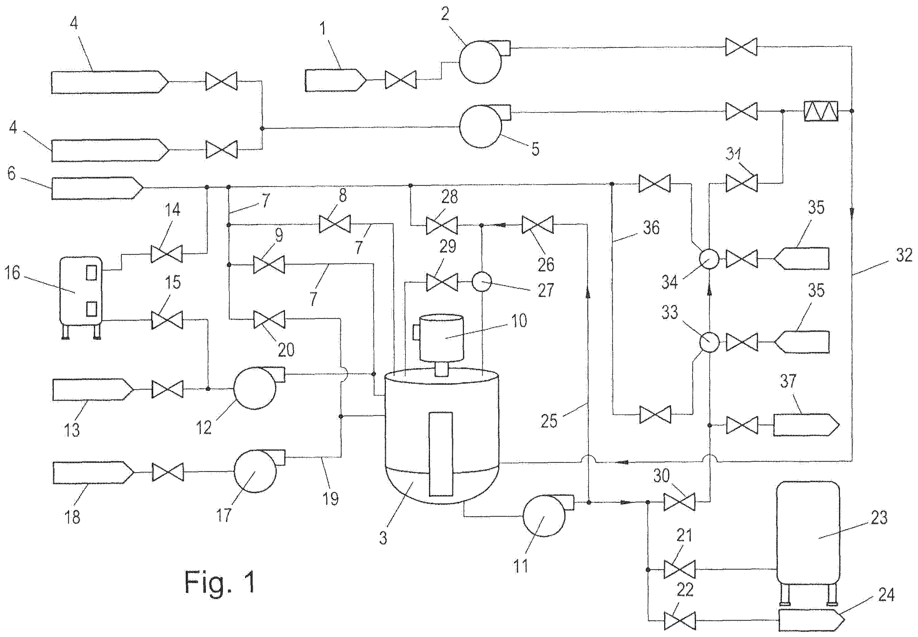

In Fig. 1 ist schematisch ein Verfahrensablauf zum Herstellung eines Trockenverfestigers bestehend aus glyoxyliertem Polyacrylamid gezeigt, bei welchem eine wässrige Lösung aus Polyacrylamid in einem Batch-Reaktor mit Ethandial (Gloyxal) umgesetzt wird. Hierbei wird aus einem Lagertank 1 über eine Dosierpumpe 2 sowie eine Mehrzahl von Ventilen Glyoxal in einen Reaktor 3 eingespeist. Gleichzeitig wird aus wenigstens einem Tankcontainer 4, vorzugsweise jedoch zwei getrennt schaltbaren Tankcontainern 4 über eine Dosierpumpe 5 sowie ebenfalls über eine Mehrzahl von nicht näher beschriebenen Steuer- bzw. Regelventilen Polyacrylamid in den Reaktor 3 eingespeist. Zusätzlich zu dem Einspeisen von Glyoxal und von Polyacrylamid wird insbesondere vor dem Reaktanten oder gleichzeitig damit Ansatzwasser aus einem Frischwassertank 6 über eine Leitung 7 sowie geöffnete Ventile 8 und 9 in den Reaktor 3 eingebracht. Die Einspeisung von Wasser, Glyoxal und von Polyacrylamid erfolgt hierbei entweder in dieser Reihenfolge oder gleichzeitig, wobei die Dosierpumpen 2 und 5 zur gleichen Zeit eingeschaltet werden und so programmiert sind, dass sie das gewünschte molare Verhältnis von Glyoxal und Polyacrylamid dosieren. Gleichzeitig mit dem Einschalten der Dosierpumpen 2 und 5 wird ein in dem Reaktor 3 vorgesehenes Rührwerk 10, ebenso wie das schematisch dargestellte Zirkulationspumpe 11, welche ebenfalls zumindest teilweise zur Vermischung der Reaktanten beiträgt, eingeschalten. Nachdem die gewünschte Menge an Glyoxal und Lösung von Polyacrylamid zu dem Wasser zugesetzt wurden, werden die Zufuhrpumpen 2 und 5 abgeschaltet, die Ventile 8 und 9 geschlossen und die Zufuhr der Reaktanten gestoppt. Gleichzeitig mit dem Stoppen der Zugabe der Reaktanten wird über eine Laugenpumpe 12 das Zudosieren von Lauge, z.B. Natronlauge aus einem Laugentank 13 begonnen, so lange, bis der gewünschte pH-Wert der Reaktion, z.B. pH 9 erreicht ist. Hierbei werden, um die Laugenkonzentration und insbesondere den pH-Wert präzise einstellen zu können, zusätzlich zum Einschalten der Zufuhrpumpe 12 für die Lauge Ventile 14 und 15 geöffnet, welche die Zufuhr von Wasser, sei es Frischwasser aus dem Frischwassertank 6 bzw. teilweise auch Spülwasser aus dem Spülwassertank 16 zu der konzentrierten Lauge steuern bzw. regeln, um eine soweit verdünnt Lauge in den Reaktor 3 eindosieren zu können, um den gewünschten pH-Wert präzise einstellen zu können. Mit dem Beginn der Laugendosierung und insbesondere mit Erreichen des basischen pH-Werts, z.B. 9, beginnt die Umsetzung der Reaktanten in den Reaktor 3, wobei folgende Faktoren kontinuierlich aufgezeichnet werden, die Temperatur des Reaktionsgemisches, die Trübung des Reaktionsgemisches, der pH-Wert ebenso wie die Stromaufnahme der Zirkulationspumpe 11. Bei Erreichen von wenigstens einem der folgenden Parameter, nämlich das Erreichen eines vorgegebenen Trübungswerts, Erreichen einer konstanten Stromaufnahme der Zirkulationspumpe oder Erreichen eines vorgegebenen pH-Wert-Abfalls wird die Reaktion durch Einschalten der Säurepumpe 17 und somit durch Zugabe von Säure, beispielsweise Schwefelsäure aus einem Säurevorratstank 18 in den Reaktor 3 gestoppt. Zur Einstellung der entsprechenden Konzentration der zuzudosierenden Säure wird wiederum Frischwasser aus dem Frischwassertank 6 in die Zufuhrleitung 19 für die Säure zum Reaktor 3 eingespeist, indem Ventil 20 geöffnet wird. Zum Zeitpunkt der Säuredosierung sind die Ventile 8, 9 für die Aufgabe von Frischwasser zu dem Reaktor zur Einstellung der Ausgangskonzentration der Reaktanten ebenso wie die Ventile 14 und 15, welche die Konzentration der Lauge einstellen sollen, geschlossen. Auch die entsprechenden Ventile, welche die entsprechenden einzelnen Vorratstanks von ihren Dosierpumpen bzw. Leitungen abtrennbar machen, sind geschlossen, wobei der Einfachheit halber Steuer- bzw. Regelventile, welche in Fig. 1 dargestellt sind, und deren Funktion selbsterklärend ist, nicht näher beschrieben werden. Die Säurepumpe 17 wird bei Erreichen eines pH-Werts von etwa 3 bis 4 wiederum abgeschaltet und die Zirkulationspumpe 11 bleibt eingeschalten, wobei zusätzlich Ventil 21 sowie gegebenenfalls Ventil 22 geöffnet werden, um das Produkt in einen Lagertank 23 auszutragen, sowie gegebenenfalls vorhandene Abfallmengen unmittelbar bei 24 auszutragen. Aus dem Lagertank 23 wird das Produkt in der Folge unmittelbar der Papiermaschine zugeführt.

Nachdem zu Beginn des Verfahrens sämtliche Reaktanten sowie die erforderliche Menge an Frischwasser dem Reaktor 3 aufgegeben wurden ebenso wie die erforderliche Laugenmenge, um die Reaktion zu starten und der pH-Wert auf den für die Reaktion gewünschten Wert eingestellt wurde, startet die Umsetzung der Reaktanten in dem Reaktor 3. Die Rühreinrichtung 10 wird betätigt ebenso wie die Umlaufpumpe 11. Für die Überwachung der Reaktion wird wenigstens ein Bypasskreislauf durch Öffnen der entsprechenden Ventile freigeschalten, um wenigstens einen der folgenden Werte zu messen: pH-Wert der Reaktionsmischung, Stromaufnahme der Zirkulationspumpe sowie eine Trübungsmessung.

Zur Trübungsmessung wird das in der Bypassleitung 25 zwischengeschaltete Ventil 26 geöffnet, so dass die Zirkulationspumpe 11 wenigstens über diesen Kreislauf das Reaktionsgemisch permanent im Kreislauf führt. In diesem Kreislauf ist weiterhin ein Trübungsmesser 27 eingeschalten, welcher kontinuierlich die Trübung des Reaktionsgemisches misst. Die Ventile 28 und 29 sind hierbei dafür vorgesehenen, dass nach Ende einer Umsetzung der Trübungsmesser wiederum mit Frischwasser gespült werden kann, um Ablagerung auf diesem mit Sicherheit vollständig vor der nächsten Messung zu entfernen.

Gleichzeitig bzw. getrennt von der Trübungsmessung kann durch Öffnen der Ventile 30 und 31 eine zweite Bypassleitung 32 freigegeben werden, in welcher wenigstens zwei pH-Sonden 33 und 34 zwischengeschalten sind. Betreffend den pH-Messwertzyklus ist festzuhalten, dass dieser gleichzeitig mit dem Trübungsmesszyklus freigeschaltet sein kann oder auch getrennt oder gesondert von diesem. Schließlich ist zur Reinigung der pH-Sonden ein gesonderter Reinigungskreislauf vorgesehen, welcher einerseits eine Luftzufuhr 35 zu den einzelnen Sonden vorsieht, ebenso wie einen Spülkreislauf 36 für die einzelnen pH-Messwertsonden, ebenso wie einen Ablauf 37. Dieser Spülkreislauf 36 wird wie folgt betätigt. Nach Beendigung der Umsetzung werden die Ventile 30 und 31 geschlossen, so dass die pH-Sonden von der dem restlichen System getrennt sind. Bei Reinigung der pH-Sonden 33, 34 wird nun ein Ventil 38, welches mit dem Ablauf 37 verbunden ist, geöffnet, Flüssigkeit aus den abgesperrten Teil der Zirkulationsleitung für die pH-Messung abgelassen. Jede pH-Sonde weist ein zugeordnetes Spülventil auf, welches unmittelbar Spülwasser aus dem Kreislauf 36 auf die jeweilige pH-Sonde 33, 34 aufbringt. Das Spülwasser wird hierbei unter Druck auf die Sonden 33 und 34 gesprüht, um die Ablagerung aus der Reaktion auf den pH-Sonden abzulösen. Für eine effiziente Reinigung wird hierbei in einem Zyklus gefahren, bei welchem zuerst eine Sonde mit Spülwasser besprüht wird, dann ein mit der Luftzufuhr 35 verbundenes Ventil, welches zu dieser pH-Sonde gehört, geöffnet wird, um Spülwasser aus der Leitung zu treiben und in der Folge wird die zweite pH-Sonde in gleicher Weise wie die erste behandelt. Ein derartiger Zyklus wird mehrfach durchlaufen, worauf sämtliche Ventile geschlossen werden und die Luft mit Hilfe von Spülwasser aus der Leitung verdrängt wird und zur Vergleichmäßigung des Drucks in der Leitung wenigstens eines der Ventil 30 oder 31 wieder geöffnet wird.

Nach einer derartigen Spülsequenz ist sichergestellt, dass jede pH-Sonde von Ablagerungen, welche bereits zur Umsetzung von Glyoxal mit Polyacrylamid gebildet werden, befreit ist und in der nächsten Umsetzung der Reaktanten wiederum eine pH-Sonde ohne jede Ablagerung zur Verfügung gestellt werden kann und somit eine exakte pH-Wert-Messung durchgeführt werden kann.

Nach Austrag des Reaktionsprodukts aus dem Reaktor 3 und vor Beginn eines neuen Zyklus werden, wie ausgeführt, um Messfehler zu vermeiden, die während der Reaktion von Wasser, Glyoxal und Polyacrylamid auf der Anlage in Rohrleitungen sowie auch den Sonden, gebildete Ablagerungen soweit als möglich entfernt, um die Messgenauigkeit der Anlage aufrecht zu erhalten. Die Ablagerungen in den Behältern sowie den Rohrleitungen stellen bei einer derartigen Reaktion keine Probleme dar, allerdings führen Ablagerungen auf pH-Sonden dazu, dass die Messgeschwindigkeit der pH-Sonden verzögert wird und dadurch die Messgenauigkeit und insbesondere die Ansprechgeschwindigkeit der Anlage verzögert wird. Bei verzögerter Ansprechgeschwindigkeit der Anlage ist es nicht mehr möglich, die Reaktion frühzeitig und exakt zu stoppen, so dass es gegebenenfalls zu zu langen Reaktionszeiten und dadurch Produktionsverlusten und verschlechterten Produkten führt, weshalb der oben beschriebenen Reinigungszyklus für die pH-Sonden durchgeführt wird.

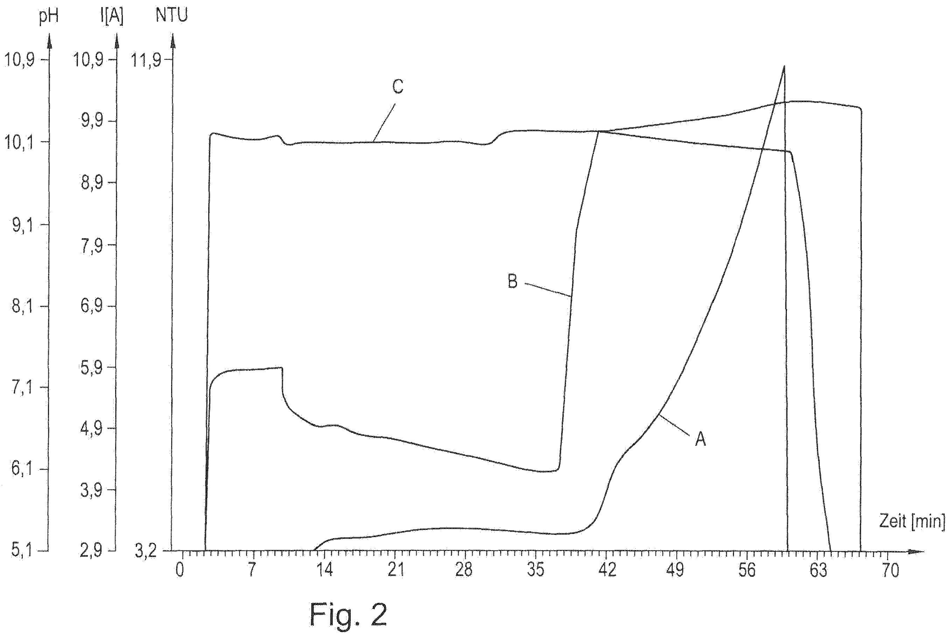

In Fig. 2 ist ein Plot dargestellt, in welchem mehrere während der Umsetzung von Glyoxal und Polyacrylamid in wässeriger Lösung gemessene Faktoren aufgezeichnet sind.

In diesem ist auf der Abszisse die Zeit in Minuten dargestellt. In Fig. 2 stellt die Kurve A die Änderung der Trübung im Verlauf der Reaktion dar, die Kurve B den während der Umsetzung von Glyoxal mit Polyacrylamid in wässeriger Lösung gemessenen pH-Wert und die Kurve C die Stromaufnahme der Zirkulationspumpe während der Umsetzung. Hierbei ist klar zu ersehen, dass die Kurve A bis zum Zeitraum von etwa 40 min im Wesentlichen einen gleichbleibenden Trübungswert von durchschnittlich 3,5 NTU aufweist, dass dieser Trübungswert ab 40 min bis zu einer Zeitdauer von etwa 59 min steil bis auf etwa 10,9 NTU ansteigt und dann senkrecht abfällt. Bei 59 min wurde die Reaktion durch Säurezugabe gestoppt, wie dies auf der ebenfalls aufgezeichneten Kurve B erkenntlich ist. In Kurve B ist zu sehen, dass ab einem Zeitraum von 37 min bis zu einem Zeitraum von 40 min Base zu Glyoxal und Polyacrylamid zugesetzt wurde, wie dies am Anstieg des pH-Werts eindeutig erkenntlich ist. Dieser pH-Wert sinkt im Zeitraum zwischen 40 min und 59 min langsam vom Ausgangs-pH-Wert von etwa 9,6 auf einen Wert von etwa 9,3 ab und fällt dann stark ab, was den Beginn der Säurezugabe zu der Reaktionsmischung anzeigt, woraus erkenntlich ist, dass die Reaktionsdauer in dem in Fig. 2 gezeigten Beispiel etwa 19 min beträgt.

In gleicher Weise ist aus dem Graph C zu erkennen, dass die Stromaufnahme der Zirkulationspumpe zuerst im Wesentlichen konstant auf einem Ausgangswert von etwa 9,8 A bleibt, dass sie etwa 5 min nach Ende der Zugabe der Lauge langsam, im Wesentlichen linear anzusteigen beginnt und dass bei Erreichen einer Stromaufnahme von etwa 10,3 A die Stromaufnahme der Zirkulationspumpe wiederum einen konstanten Wert erreicht. Als Zirkulationspumpe kann hierbei z.B. eine Pumpe F&B Hygia II KYY 65/65/7, 5,2 der Firma Grundfos Pumpen Vertrieb Ges.m.b.H. eingesetzt werden. Dieser Wert wird dann erreicht, wenn die Säurezugabe begonnen wurde, d.h. die Reaktion durch Zugabe von Säure gestoppt wurde und eine weitere Umsetzung von Glyoxal und Polyacrylamid durch die Säurezugabe verhindert wurde. Ab diesem Zeitpunkt ist der Stromaufnahmewert der Zirkulationspumpe wiederum konstant. Der Gesamtaustrag beträgt hierbei zwischen 0,1 A und 1 A, insbesondere 0,2 A bis 0,6 A.

Wie dies diesen drei Kurven A, B und C erkannt werden kann, sind alle drei Kurven zur Steuerung bzw. Regelung der Reaktion heranzuziehen, insbesondere dann, wenn vorher Grenzwerte definiert werden, wie beispielsweise um wieviel NTU die Trübung ansteigen darf bis die Reaktion vervollständigt ist, um wieviel A die Stromaufnahme der Zirkulationspumpe ansteigen darf, bis die Reaktion vervollständigt ist und um wie viele Einheiten der pH-Wert während der Umsetzung von Glyoxal und Polyacrylamid absinken darf, um auf eine vollständige Umsetzung rückschließen zu können.

Das erfindungsgemäße Verfahren wird mit Praxisbeispielen weiter erläutert.

### Allgemeine Verfahrensführung

In einem Mischtank wird eine vorberechnete Menge an Wasser vorgelegt. Gleichzeitig oder auch nach Vorlage des gesamten Wassers werden Ethandial und Polyacrylamid in den Tank zugeführt und mittels einer Rühreinrichtung und der Zirkulationspumpe vermischt. Durch Zugabe der Base wird die Reaktion bei einem pH-Wert, welcher über 8 liegt gestartet, worauf in der Folge die Reaktion und auch deren Ende durch wenigstens zwei der folgenden Messungen kontrolliert wird:
a. Trübungsmessung,
b. pH-Wert-Anpassung über die Temperatur,
c. pH-Wert-Anpassung über die Reaktionszeit,
d. Abfall des pH-Werts ,
e. Stromaufnahme der Zirkulationspumpe, und
f. Abweichung der Trübung von der Trendlinie.

### Beispiel 1

### Trübungsmessung und pH-Wert Korrektur in Abhängigkeit von der Reaktionszeit

Bei der oben beschriebenen Reaktion steigt die Trübung während der Reaktion um 6 NTU an. Die Messung der Reaktionszeit zeigt, dass diese mit 18 min um 3 min von einem vorgegebenen Sollwert von 15 min abweicht. Es erfolgt daher in der Folge eine pH-Wert-Korrektur für den Ausgangs-pH-Wert, welcher 8,5 betragen hat, um 0,2 pH-Wert-Einheiten, um bei der nächsten Charge die Reaktionszeit in Richtung der Sollreaktionszeit zu korrigieren.

### Beispiel 2

### Trübungsmessung und Messung der Stromaufnahme der Zirkulationspumpe

Während der für 15 min veranschlagten Reaktion steigt die Trübung um 6 NTU an und gleichzeitig erhöht sich die Stromaufnahme der Zirkulationspumpe von 0,2 A auf 0,6 A, worauf die Reaktion umittelbar mit Säure gestoppt wird, da für beide Werte, die vor Beginn der Umsetzung festgelegten Änderungen innerhalb der vorgegebenen Zeit erreicht werden, so dass der gewünschte Umsetzungsgrad erreicht war.

### Beispiel 3

### Die Steuerung über den pH-Wert-Abfall und Anstieg der Trübung

Während der Umsetzung von Glyoxal und Polyacrylamid fällt der pH-Wert um 0,3 Einheiten ab. Nachdem ein Anstieg der Trübung um 5 NTU beobachtet wurde, wird die Reaktion mit Säure gestoppt. In analoger Weise ist die Steuerung über den pH-Wert-Abfall und die Stromaufnahme der Zirkulationspumpe möglich. In diesem Fall wird, nachdem ein pH-Wert-Abfall um 0,3 Einheiten beobachtet wurde, die Stromaufnahme der Pumpe überprüft und es wird festgestellt, dass diese von ursprünglich 0,2 A auf 0,6 A angestiegen ist. Auch in diesem Fall wird unmittelbar durch Säurezugabe die Reaktion gestoppt, da für beide Werte die vor Beginn der Umsetzung festgelegten Änderungen innerhalb der vorgegebenen Zeit erreicht werden.

### Beispiel 4

### Die Steuerung über den pH-Wert-Abfall bei festgelegter Umsetzungszeit

Die Umsetzungszeit von Glyoxal und Polyacrylamid wird mit 15 min voreingestellt. Es wird der pH-Wert-Abfall gemessen und festgestellt, dass der pH-Wert bereits nach 13 min um 0,3 abgefallen ist, was eine Vervollständigung der Reaktion anzeigt. Die Reaktion wird durch Zugabe von Säure gestoppt. Dieser Ansatz wird ein zweites Mal wiederholt mit demselben Ergebnis, worauf eine pH-Wert-Korrektur vorgenommen wird, indem dieser um 0,2 Einheiten beim nächsten Ansatz nach unten korrigiert wird, wodurch sich die Reaktionszeit aufgrund der niedrigeren Basizität der Reaktion erhöht.

### Beispiel 5

### pH-Wert-Korrektur bei festgelegter Temperatur

Die Eingangstemperatur der Reaktion beträgt 25 °C. Der pH-Wert für den Beginn der Reaktion wird gemäß folgender Formel an die tatsächlichen Gegebenheiten angepasst: pH-Wert-Basis bei 20 °C + (Temperatur Eingangsreaktion - 20 °C × 0,05) = pH-Wert. Im vorliegenden Fall ist der Basis-pH-Wert bei 20 °C 9, so dass sich bei Verwendung dieser Formel ein pH-Wert von 9,25 ergibt, welcher im Verlauf der Reaktion um 0,3 Einheiten abfällt, so dass bei einem pH von 8,95 die Reaktion durch Säurezugabe gestoppt werden kann, da sie als vollständig betrachtet wird.

## Patentansprüche

1. Verfahren zur Herstellung eines Trockenverfestigers aus glyoxiliertem Polyacrylamid, bei welchem eine wässerige Lösung von Polyacrylamid unter Rühren mittels einer Zirkulationspumpe mit Ethandial (Glyoxal) versetzt wird, die Reaktion durch Zugabe einer Base, insbesondere einer starken Base, bei einem pH-Wert größer 8 gestartet wird und unter Rühren oder Zirkulieren reagieren gelassen wird, worauf nach Ablauf einer vorgegebenen Reaktionszeit die Reaktion durch Zugabe einer Säure unter Rühren oder Zirkulieren gestoppt wird, **dadurch gekennzeichnet, dass** die Umsetzung von Polyacrylamid mit Ethandial in einem Mengenverhältnis von 3:1 bis 10:1 für eine vorbestimmte konstante Zeit zwischen 6 und 20 Minuten, insbesondere 12 bis 18 Minuten durchgeführt wird, dass das Verfahren als diskontinuierliches Verfahren geführt wird, bei welchem eine quantitative Umsetzung des Ethandials mit einer Überschussmenge von Polyacrylamid in einem wässerigen, basischen Milieu durch d) Abfall des pH-Wertes sowie wenigstens einem weiteren der Faktoren, gewählt aus:
a) Trübungsmessung,
b) pH-Wert-Anpassung über die Temperatur,
c) pH-Wert-Anpassung über die Reaktionszeit,
e) Stromaufnahme der Zirkulationspumpe
gesteuert und/oder geregelt wird.

2. Verfahren nach Anspruch 1, **dadurch gekennzeichnet, dass** Polyacrylamid und Ethandial in einem Mengenverhältnis von 5:1 bis 6:1 eingesetzt werden.

3. Verfahren nach Anspruch 1 oder 2, **dadurch gekennzeichnet, dass** die Reaktion von Polyacrylamid und Ethandial durch Absenken des pH-Werts des Reaktionsgemischs auf einen Wert zwischen 2 und 6, insbesondere 3,5 und 4,5 mit Säure gestoppt wird.

4. Verfahren nach Anspruch 3, **dadurch gekennzeichnet, dass** das Ansäuern nach Einsetzen eines pH-Wert-Abfalls der Reaktionsmischung um einen Wert von wenigstens 0,1 bis etwa 1, insbesondere 0,3 und/oder nach Anstieg der Trübung der Reaktionsmischung um 4 bis 10 NTU, insbesondere 6 NTU durchgeführt wird.

5. Verfahren nach Anspruch 1, 2 oder 3, **dadurch gekennzeichnet, dass** ausgehend von einer Temperatur von 25°C des Reaktionsgemisches mit steigender Temperatur des Reaktionsgemisches der pH-Wert entsprechend der Formel pH Start = Basis pH + [(Temp Start - 20 °C). F], worin der Basis pH einen vorgewählten Wert darstellt, der pH Start sich aus der Reaktion ergibt und den bei Startwert für die nächste Reaktion darstellt, die Temp Start die Temperatur am Eingang/Beginn der Reaktion darstellt und F einen Multiplikator zwischen 0,03 und 0,08 darstellt, abgesenkt und mit sinkender Temperatur angehoben wird.

6. Verfahren nach Anspruch 5, **dadurch gekennzeichnet, dass** die Anhebung oder Absenkung des pH-Wertes entsprechend einem dem Multiplikator F entsprechenden Temperaturkorrekturfaktor zwischen 0,03 und 0,08, insbesondere 0,05 vorgenommen wird.

7. Verfahren nach Anspruch 5 oder 6, **dadurch gekennzeichnet, dass** bei festgelegter konstanter Umsetzungszeit eine pH-Wertanpassung um 0,1 bis 1,0, insbesondere 0,2 bis 0,4, nach wenigstens einmaliger Feststellung einer Abweichung zwischen 1 und 10 Minuten, insbesondere 2 bis 4 Minuten von der festgelegten Umsetzungszeit, vorgenommen wird.

8. Verfahren nach Anspruch 1, 2 oder 3, **dadurch gekennzeichnet, dass** die pH-Wert Absenkung des Reaktionsgemisches mit Säure bei Erreichen einer konstanten Stromaufnahme der Zirkulationspumpe im Bereich von 0,1 A bis 1 A, insbesondere 0,2 A bis 0,6 A gegenüber einem Ausgangswert durchgeführt wird.

9. Verfahren nach einem der Ansprüche 1 bis 8, **dadurch gekennzeichnet, dass** die Steuerung und/oder Regelung des Verfahrens durch Überwachung einer Kombination der Faktoren a) und d); a), b), c) und d); a), d) und e); b) und d); b), c) und d) oder b), d) und e) durchgeführt wird.

## Claims

1. A method for preparing a dry-strength agent of glyoxylated polyacrylamide, in which an aqueous solution of polyacrylamide is supplemented with ethanediol (glyoxal) under stirring by means of a circulation pump, the reaction is started by the addition of a base, in particular a strong base, at a pH value above 8, and is allowed to react under stirring or circulating, whereupon the reaction is stopped by the addition of an acid under stirring or circulating after completion of a predetermined reaction time, **characterized in that** the reaction of polyacrylamide and ethandial is a ratio of 3:1 to 10:1 is performed over a predetermined constant time of 6 to 20 minutes, in particular 12 to 18 minutes, that the method is performed as a discontinuous method in which the quantitative reaction of ethanedial with an excess amount of polyacrylamide in an aqueous basic medium is controlled and/or regulated by d) drop of pH value and at least one of the following factors, selected from:
a) turbidity measurement
b) pH adaptation as a function of the temperature
c) pH adaptation as a function of the reaction time or
e) current consumption of the circulation pump.

2. A method according to claim 1, **characterized in that** polyacrylamide and ethanedial are used at a ratio of 5:1 to 6:1.

3. A method according to claim 1 or 2, **characterized in that** the reaction of polyacrylamide and ethanedial is stopped by an acid, by lowering the pH value of the reaction mixture to a value between 2 and 6, in particular between 3.5 and 4.5.

4. A method according to claim 3, **characterized in that** the acidification is effected after the onset of a pH value drop of the reaction mixture by a value of at least 0.1 to about 1, in particular 0.3, and/or after an increase in the turbidity of the reaction mixture by 4 to 10 NTU, in particular 6 NTU.

5. A method according to claim 1, 2 or 3, **characterized in that**, based on a temperature of 25°C of the reaction mixture, the pH value is lowered at an increasing temperature of the reaction mixture, and raised at a decreasing temperature, according to the formula pH start = basis pH + [(temp start - 20°C).F], wherein basis pH constitutes a preselected value, pH start results from the reaction and constitutes the initial value for the next reaction, temp start represents the temperature at the onset/beginning of the reaction, and F is a multiplier between 0.03 and 0.08.

6. A method according to claim 5, **characterized in that** an increase or decrease of the pH value is performed according to a temperature correction factor of between 0.03 and 0.08, in particular 0.05.

7. A method according to claim 5 or 6, **characterized in that**, at a fixed constant reaction time, a pH adaptation by 0.1 to 1.0, in particular 0.2 to 0.4, is effected after an at least one-time detection of a deviation of between 1 and 10 minutes, in particular 2 to 4 minutes, from the fixed reaction time.

8. A method according to claim 1, 2 or 3, **characterized in that** the lowering of the pH value of the reaction mixture is performed by the aid of an acid when reaching a constant current consumption of the circulation pump ranging from 0.1A to 1A, in particular 0.2A to 0.6A, is performed against an initial value.

9. A method according to any one of claims 1 to 8, **characterized in that** the control and/or regulation of the method is performed by observing a combination of factors a) and d); a), b), c) and d); a), d) and e); b) and d); b), c) and d) or b), d) and e).

## Revendications

1. Procédé de fabrication d'un solidifiant sec composé de polyacrylamide glyoxylé, où une solution aqueuse de polyacrylamide est mélangée à de l'éthanedial (glyoxal) sous agitation au moyen d'une pompe de circulation, la réaction est démarrée par l'addition d'une base, en particulier d'une base forte, à un pH supérieur à 8 et on laisse le mélange réagir sous agitation ou circulation, après quoi la réaction est arrêtée par l'addition d'un acide sous agitation ou circulation une fois écoulé un temps de réaction prédéfini, **caractérisé en ce que** la transformation de polyacrylamide avec de l'éthanedial est effectuée selon un rapport de quantités de 3:1 à 10:1 pendant une durée constante prédéfinie entre 6 et 20 minutes, en particulier de 12 à 18 minutes, que le procédé est mené en tant qu'un procédé discontinu où une transformation quantitative de l'éthanedial avec une quantité excédentaire de polyacrylamide dans un milieu aqueux basique est commandée et/ou régulée par d) l'abaissement du pH ainsi que par au moins un autre des facteurs choisis parmi :
a) la mesure de la turbidité,
b) l'adaptation du pH en fonction de la température,
c) l'adaptation du pH en fonction du temps de réaction,
e) la consommation de courant de la pompe de circulation.

2. Procédé selon la revendication 1, **caractérisé en ce que** du polyacrylamide et de l'éthanedial sont utilisés selon un rapport de quantités de 5:1 à 6:1.

3. Procédé selon la revendication 1 ou 2, **caractérisé en ce que** la réaction du polyacrylamide et de l'éthanedial est arrêtée avec de l'acide en abaissant le pH du mélange réactionnel à une valeur entre 2 et 6, en particulier 3,5 et 4,5.

4. Procédé selon la revendication 3, **caractérisé en ce que** l'acidification est mise en oeuvre après l'utilisation de l'abaissement du pH du mélange réactionnel d'une valeur d'au moins 0,1 à environ 1, en particulier de 0,3 et/ou après l'augmentation de la turbidité du mélange réactionnel de 4 à 10 NTU, en particulier de 6 NTU.

5. Procédé selon la revendication 1, 2 ou 3, **caractérisé en ce qu'**en partant d'une température de 25 °C du mélange réactionnel avec une température croissante du mélange réactionnel, le pH correspondant à la formule pH Start = pH de base + [(Temp Start - 20 °C) .F], dans laquelle la pH de base représente une valeur présélectionnée, le pH Start résulte de la réaction et représente la valeur de départ pour la prochaine réaction, la Temp Start représente la température à l'entrée/au début de la réaction et F représente une multiplicateur entre 0,03 et 0,08, est abaissé et est relevé au fur et à mesure que la température chute.

6. Procédé selon la revendication 5, **caractérisé en ce que** le relèvement ou l'abaissement du pH est réalisé conformément à un facteur de correction de température entre 0,03 et 0,08, en particulier de 0,05, qui correspond au multiplicateur F.

7. Procédé selon la revendication 5 ou 6, **caractérisé en ce qu'**en cas d'un temps de transformation constant fixé, une adaptation du pH de 0,1 à 1,0, en particulier de 0,2 à 0,4, est réalisée après qu'au moins un écart entre 1 et 10 minutes, en particulier de 2 à 4 minutes par rapport au temps de transformation fixé est constaté pour la première fois.

8. Procédé selon la revendication 1, 2 ou 3, **caractérisé en ce que** l'abaissement du pH du mélange réactionnel avec de l'acide est mis en oeuvre lors de l'atteinte d'une consommation de courant constante de la pompe de circulation dans la plage de 0,1 A à 1 A, en particulier de 0,2 A à 0,6 A par rapport à une valeur de départ.

9. Procédé selon l'une des revendications 1 à 8, **caractérisé en ce que** la commande et/ou la régulation du procédé sont mises en oeuvre en surveillant une combinaison des facteurs a) et d) ; a), b), c) et d) ; a), d) et e) ; b) et d) ; b), c) et d) ou b), d) et e).
